(19) Europäisches Patentamt
European Patent Office
Office européen des brevets

(11) **EP 1 107 187 A1**

(12) **DEMANDE DE BREVET EUROPEEN**

(43) Date de publication:
**13.06.2001 Bulletin 2001/24**

(51) Int Cl.[7]: **G06T 17/20**

(21) Numéro de dépôt: **00403290.0**

(22) Date de dépôt: **24.11.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.12.1999 FR 9915713**

(71) Demandeur: **INSTITUT FRANCAIS DU PETROLE 92852 Rueil-Malmaison Cedex (FR)**

(72) Inventeurs:
• **Balaven, Sophie
91300 Massy (FR)**
• **Boissonnat, Jean-Daniel
06730 Mouans Sartoux (FR)**
• **Bennis, Chakib
92500 Rueil-Malmaison (FR)**
• **Sarda, Sylvain
92500 Rueil-Malmaison (FR)**

(54) **Méthode pour générer un maillage sur une formation hétérogène traversée par une ou plusieurs discontinuités géométriques dans le but de réaliser des simulations**

(57) -Méthode pour générer un maillage hybride d'une formation hétérogène traversée par une ou plusieurs discontinuités géométriques, telle que par exemple une formation souterraine où l'on a foré un ou plusieurs puits, ou une formation fracturée en combinant des maillages structurés et des maillages non structurés, dans le but de réaliser des simulations en accord avec un schéma numérique défini.

- Le maillage hybride dans une application à un milieu traversé par des puits par exemple, est réalisé essentiellement en associant un premier maillage structuré (G1) pour mailler le milieu hétérogène en respectant ses discontinuités, des deuxièmes maillages structurés (G2) de type radial pour mailler une zone autour de chaque conduit ou puits, permettant de mieux respecter des contraintes particulières liées aux écoulements dans cette zone. Pour relier le premier maillage du milieu et les deuxièmes maillages de puits, on interpose entre eux des maillages non structurés de transition (G3) et on utilise pour les réaliser la technique des diagrammes de puissance qui est ici particulièrement avantageuse en ce qu'elle permet de relier entre eux de manière conforme des maillages structurés non réguliers.

- Applications à des simulateurs pour gisements d'hydrocarbures par exemple.

FIG.17

## Description

La présente invention concerne une méthode pour générer un maillage hybride d'une formation hétérogène traversée par une ou plusieurs discontinuités géométriques, dans le but de réaliser par exemple des simulations.

La méthode s'applique particulièrement à la formation d'un maillage adapté à un gisement ou réservoir souterrain traversé par un ou plusieurs puits, ou par des fractures ou failles, dans le but d'y modéliser des déplacements de fluides tels que des hydrocarbures.

## Etat de la technique

La génération de maillage est un élément crucial pour les simulateurs de réservoir de nouvelle génération. Le maillage permet de décrire la géométrie de la structure géologique étudiée au moyen d'une représentation en éléments discrets dans lesquels on effectue la simulation suivant un schéma numérique approprié. Une meilleure compréhension des phénomènes physiques nécessite de simuler en 3D des écoulements polyphasiques dans des structures géologiques de plus en plus complexes, au voisinage de plusieurs types de singularités telles que les stratifications, les failles, les biseaux, les chenaux et les puits complexes. Toute cette complexité doit être prise en compte en premier lieu par le maillage qui doit restituer aussi fidèlement que possible les informations géologiques dans leur caractère hétérogène.

La modélisation de maillage a connu de grands progrès ces dernières années dans d'autres disciplines telles que l'aéronautique, la combustion dans les moteurs, la mécanique des structures, etc. Cependant les techniques de maillage utilisées dans les autres domaines ne sont pas transposables telles quelles dans le monde pétrolier, car les contraintes de métier ne sont pas les mêmes. Par exemple, en simulation de réservoir, les schémas numériques sont construits à partir de volumes de contrôle afin de mieux respecter la conservation de la masse dans le cas d'équations de transport de nature hyperbolique. Le maillage doit être de type dit "block-centered" c'est-à-dire que les noeuds doivent être situés à l'intérieur de chaque couche et les limites de chaque bloc doivent suivre l'interface entre les couches. Or si on ne tenait pas compte de cette contrainte, on placerait naturellement les noeuds le long des failles et le long des limites de stratification. Ceci aurait pour conséquence de faire passer ces interfaces à travers le volume de contrôle utilisé. La saturation, constante dans le volume de contrôle, ne pourrait alors respecter la discontinuité et les résultats seraient imprécis. Il est donc nécessaire de mettre au point de nouvelles techniques mieux adaptées aux besoins pétroliers.

Les maillages cartésiens, couramment employés dans les simulateurs commerciaux actuels, sont mal adaptés à la résolution de ces problèmes nouveaux posés par l'exploitation des gisements pétroliers. Les maillages cartésiens, étant à base d'éléments parallélépipédiques, ne permettent pas de représenter de telles géométries complexes.

On connaît une méthode pour générer des maillages hexaédriques structurés en 3D de type dit CPG (pour Corner-Point-Geometry) qui respecte la géométrie des corps. On la trouve décrite dans le brevet FR 2 747 490 (US 5 844 564) du demandeur et également dans la publication suivante :

- Bennis Ch. et al. « One More Step in Gocad Stratigraphic Grid Génération » : Taking into Account Faults and Pinchouts ; SPE 35526, Stavanger, 1996.

Ce type de maillage offre plus de souplesse que le maillage cartésien car il est constitué d'éléments hexaédriques quelconques pouvant être dégénérés. Il respecte rigoureusement les horizons, les failles et permet de représenter certaines inconformités telles que des biseaux, car sa construction s'appuie sur ces éléments. Toutefois ce type de maillage ne permet pas de résoudre toutes les complexités géométriques comme par exemple des maillages radiaux circulaires autour de puits complexes. Il est possible de réaliser séparément le maillage du gisement et les maillages autour des puits mais il est difficile de représenter plusieurs objets dans un même maillage de gisement de type CPG à cause des problèmes de raccordement liés au caractère structuré du maillage.

Une autre approche est également connue par laquelle on génère automatiquement des maillages 3D uniquement à base d'éléments tétraédriques de Delaunay, avec un raffinement radial circulaire autour des puits. L'avantage d'une telle approche est qu'elle est entièrement automatique et ne nécessite quasiment pas d'intervention de l'utilisateur. Toutefois cette méthode présente des inconvénients qui rendent les résultats obtenus difficilement exploitables :

- le nombre de mailles est en moyenne cinq fois plus grand que celui d'un maillage de type CPG pour une même structure, ce qui est très pénalisant pour les calculs de la simulation ;

- contrairement aux maillages structurés qu'on arrive aisément à visualiser, à explorer de l'intérieur et à modifier localement de façon interactive, il est très difficile et parfois impossible de bien contrôler les maillages tétraédriques à cause de leur taille et surtout du fait de leur caractère non structuré. Ceci pose problème autant pour valider le maillage d'un point de vue géométrique que pour comprendre et valider le résultat d'une simulation sur ce type de maillage.

D'autres approches sont également connues permettant de générer des maillages, notamment des maillages basés sur des volumes de contrôle générés à partir d'une triangulation auxquelles sont associées des techniques d'agrégation des triangles (ou tétraèdres) en quadrangles permettant de réduire le nombre de mailles. Bien que des résultats prometteurs aient été obtenus avec ces nouveaux maillages, la représentation précise de la complexité géologique des réservoirs et des puits reste un sujet de recherche et de développement. Malgré leur aspect hybride, ils restent entièrement déstructurés et seraient donc très difficiles à gérer et à manipuler en vrai 3D. De plus la prise en compte des failles réellement 3D et les puits déviés accentuerait grandement cette difficulté.

Par la demande de brevet parallèle FR 99/15120 du demandeur, on connaît une méthode pour réaliser en 3D un maillage hybride sur un milieu hétérogène qui comporte l'utilisation d'un premier maillage structuré, de type CPG par exemple, et de maillages radiaux structurés autour de trajectoires de puits ou conduits dessinés ou importées dans le modèle pour mieux tenir compte des contraintes particulières liés aux écoulements à proximité de ces puits. On les combine en insérant les maillages radiaux autour du ou de chaque puits dans le maillage global du réservoir après avoir formé dans celui-ci des cavités assez grandes pour y former des maillages de transition non structurés.

Différentes techniques sont connues pour former des maillages non structurés. On peut les réaliser à base de polyèdres canoniques (tétraèdres, pentaèdres, pyramides, etc.) selon le schéma numérique utilisé, et l'on connaît des solutions entièrement en 3D applicables à ces types de maillages.

La méthode selon l'invention vise à générer en 2.5D, des maillages de transition à base de polyèdres de type Voronoï ou analogue pour y appliquer des schémas numériques de type à volume de contrôle, que l'on ramène à un problème en 2D à condition que toutes les couches des maillages de puits et du maillage du gisement puissent se projeter verticalement dans un plan horizontal pour former des mailles identiques.

Un tel maillage doit respecter certaines contraintes :

- le segment reliant les centres ou sites de deux cellules voisines doit être orthogonal à la face commune aux deux cellules ;

- deux cellules voisines doivent partager entièrement la face qui les connecte, ce qui revient à dire que par une même face, une cellule ne peut être connectée qu'à une seule autre cellule ; et

- les cellules doivent être convexes.

Ces contraintes, en 2D, imposent que :

- les arêtes des polygones frontières ne doivent pas être modifiées (chacune doit correspondre à une arête d'une cellule créée, sans subdivision de l'arête), et que les cellules créées doivent être convexes ;

- chaque cellule doit avoir un centre tel que la droite joignant les centres de deux cellules adjacentes soit perpendiculaire à l'arête partagée par les deux cellules ; et

- les centres des cellules doivent être situés à l'intérieur de leur cellule.

D'autres approches entièrement non structurées sont également connues permettant de générer des maillages, notamment des maillages basés sur des volumes de contrôle générés à partir d'une triangulation auxquelles sont associées des techniques d'agrégation des triangles (ou tétraèdres) en quadrangles réguliers permettant de réduire le nombre de mailles.

Les diagrammes de Voronoï sont formés, comme on le sait, en déterminant autour d'un ensemble de sites P répartis dans un espace, des régions formés d'ensembles de points qui sont plus proches de chaque site que de tout autre site P de l'ensemble. Cette technique de construction est décrite de façon détaillée notamment dans les documents suivants :

- Aurenhammer, F., 1991 : Voronoi Diagrams : a Survey of Fundamental Geometric Data Structure. *ACM Comput. Surv.,* 23, 345-405

- Fortune, S.,1992 : Voronoi Diagrams and Delaunay Triangulations. Pages 225-265 of D.Z. Du & F.K. Hwang (eds), *Computing in Euclidea*n *Geometry, 2nd edn.* Lecture Notes Séries on Computing, vol. 4. Singapore : World Scientific.

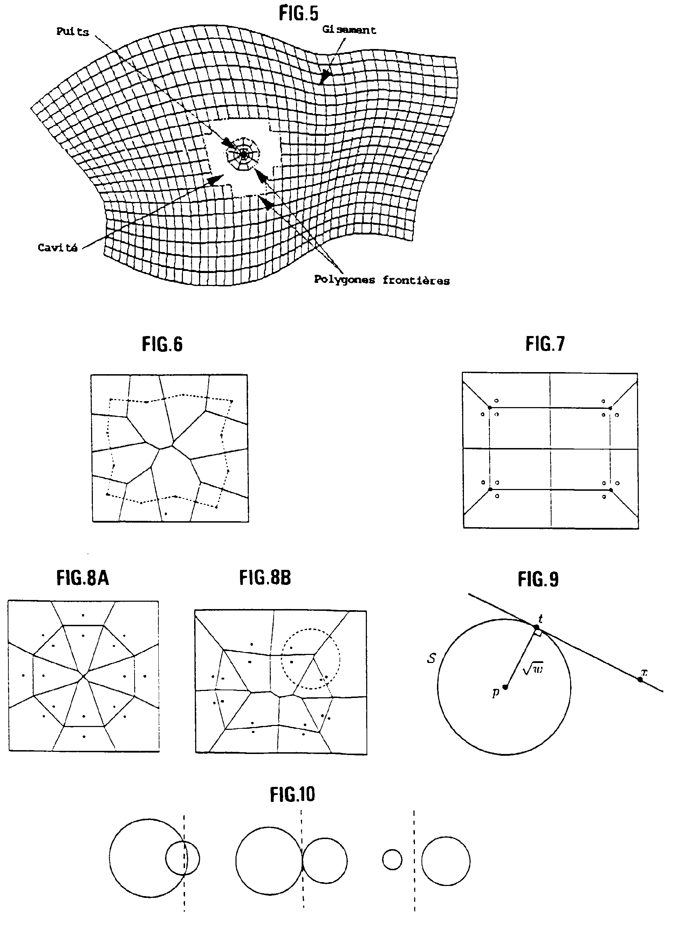

Les cellules d'un diagramme de Voronoï respectent les contraintes suivantes : l'orthogonalité entre les centres et l'arête adjacente est respectée et les cellules sont convexes. Il est donc tout naturel de proposer de remplir la cavité par des cellules de Voronoï, tout en cherchant à respecter les contraintes géométriques des bords. Cependant, si l'on crée un diagramme de Voronoï à partir des points existants (extrémités des arêtes des polygones), (cf. Fig.6) on se rend compte que ce diagramme viole les contraintes géométriques, que les arêtes des polygones ne font pas partie du diagramme et que les arêtes sont coupées

Afin d'introduire les arêtes des polygones frontières dans le diagramme, il est possible de dupliquer les points existants. De cette façon, le diagramme de Voronoï est obligé de passer par les arêtes. Toutefois, ceci n'est pas encore suffisant car si les arêtes sont bien dans le diagramme, elles sont encore divisées (cf. Fig.7).

Puisque les arêtes du diagramme de Voronoï correspondent aux médiatrices des segments définis par deux sites, on peut essayer de faire passer ces médiatrices par les extrémités des arêtes définies par nos polygones. Pour cela, pour un point extrémité donné, on choisit les sites du diagramme de Voronoï le long des arêtes adjacentes à ce point, à égale distance de celui-ci. Puisque les points sont dédoublés, on est assuré d'obtenir une arête du diagramme de Voronoï sur l'arête de notre polygone. Cependant, si le résultat obtenu est correct dans le cas d'un polygone régulier (Fig.8a), ce n'est pas le cas pour un polygone non régulier (Fig. 8b). Au moment où l'on place les derniers sites, ils ne sont pas forcément à la même distance du point que les premiers que l'on avait placés.

Dans le cas général, l'idée d'utiliser des cellules de Voronoï pour remplir la cavité ne semble donc pas adéquate.

**La méthode selon l'invention**

La méthode selon l'invention permet de simplifier la formation d'un maillage hybride adapté à un milieu hétérogène traversé par au moins une discontinuité géométrique de géométrie connue, dans le but de former un modèle représentatif d'écoulements de fluides dans ce milieu en accord avec un schéma numérique défini, la structure du milieu étant connue a priori à partir de données disponibles acquises par des mesures in situ, par des analyses et/ou des interprétations d'images du milieu (des images sismiques par exemple, dans le cas d'un gisement).

La méthode comporte la formation d'au moins un premier maillage structuré (irrégulier de type CPG par exemple) pour mailler au moins une partie du milieu, la formation d'au moins un deuxième maillage structuré pour mailler une autre partie du milieu, la formation d'au moins une cavité entre les maillages structurés englobant chaque discontinuité géométrique et de taille suffisante pour que l'on puisse former au moins un maillage non structuré assurant la transition entre les maillages structurés, et la formation de chaque maillage non structuré de transition en utilisant des diagrammes de puissance et en imposant aux maillages de transition d'être conformes au maillage des parois de chaque cavité.

La méthode s'applique par exemple à un milieu hétérogène où au moins une discontinuité géométrique est un conduit ou puits de géométrie connue traversant le milieu, auquel cas on forme un premier maillage structuré dans le milieu en respectant ses discontinuités, on forme un deuxième maillage structuré de type radial autour de chaque puits, chaque cavité étant délimitée autour de chaque deuxième maillage radial structuré en désactivant des mailles de chaque premier maillage structuré.

La méthode s'applique aussi par exemple à un milieu hétérogène où au moins une discontinuité géométrique est une fracture ou une faille traversant le milieu, auquel cas on forme un premier maillage structuré et un deuxième maillage structuré dans des parties du milieu hétérogène, de part et d'autre de chaque fracture, en respectant leurs discontinuités, chaque cavité formée pour y inclure un maillage se transition non structuré étant formée en désactivant des mailles des premier et deuxième maillages structurés, de part et d'autre de chaque faille ou fracture.

L'utilisation qui est faite ici de la technique des diagrammes de puissance est particulièrement avantageuse et commode en ce qu'elle permet de relier entre eux de manière conforme les maillages structurés non réguliers.

L'invention concerne aussi une méthode pour simuler en accord avec un schéma numérique défini, l'évolution d'un processus tel que des écoulements de fluides, dans un milieu hétérogène traversé par au moins une discontinuité géométrique de géométrie connue, en accord avec un schéma numérique défini, la structure du milieu étant connue a priori à partir de données disponibles acquises par des mesures in situ, par des analyses et/ou des interprétations d'images du milieu. Cette simulation est obtenue par la formation d'un maillage hybride constitué d'au moins un premier maillage structuré (irrégulier de type CPG par exemple) pour mailler au moins une partie du milieu, la formation d'au moins un deuxième maillage structuré pour mailler une autre partie du milieu, la formation d'au moins une cavité entre les maillages structurés englobant chaque discontinuité géométrique et de taille suffisante pour que l'on puisse former au moins un maillage non structuré assurant la transition entre les maillages structurés, en utilisant des diagrammes de puissance et en imposant aux maillages de transition d'être conformes au maillage des parois des dites cavités, et en résolvant le schéma numérique dans le maillage réalisé sur le milieu pour modéliser le processus.

Le maillage hybride global est ainsi obtenu par combinaison de plusieurs types de maillage : un maillage structuré de gisement, un maillage radial autour de chaque puits, également structuré, et des maillages non structurés de transition qui assurent la liaison entre les deux types de maillage précédents. Chacun de ces maillages possède ses propres méthodes de formation,

En utilisant un simulateur de gisement d'un type connu, tel que par exemple les simulateurs ATHOS™ ou SCORE™, à un gisement muni d'un maillage hybride obtenu par la méthode, on peut réaliser des simulations de production.

**Présentation des figures**

D'autres caractéristiques et avantages de la méthode selon l'invention, apparaîtront à la lecture de la description ci-après d'exemples non limitatifs de mise en oeuvre, en se référant aux dessins annexés où :

- la Fig.1 montre un exemple de maillage structuré d'un réservoir faillé ;

- la Fig.2 montre un exemple de maillage radial autour d'un puits vertical ;

- la Fig.3 montre un exemple de maillage d'un puits horizontal ;

- la Fig.4 montre en 2.5D, un exemple de réservoir maillé où l'on a ménagé des cavités pour des puits maillés, avant l'étape de création de maillages interstitiels non structurés destinés à les raccorder les uns aux autres ;

- la Fig.5 montre un exemple de maillage en 2D avant création du maillage de transition ;

- la Fig. 6 montre un exemple de diagramme de Voronoï qui viole des contraintes géométriques ;

- la Fig.7 montre un exemple de diagramme de Voronoï dont les arêtes sont divisées ;

- les Fig. 8A, 8B montrent des exemples de diagrammes de Voronoï, respectivement dans un cas régulier et dans un cas quelconque avec conflit ; - les Fig.9 à 14 illustrent les définitions et propriétés des diagrammes de puissance, rappelées ci-après ;

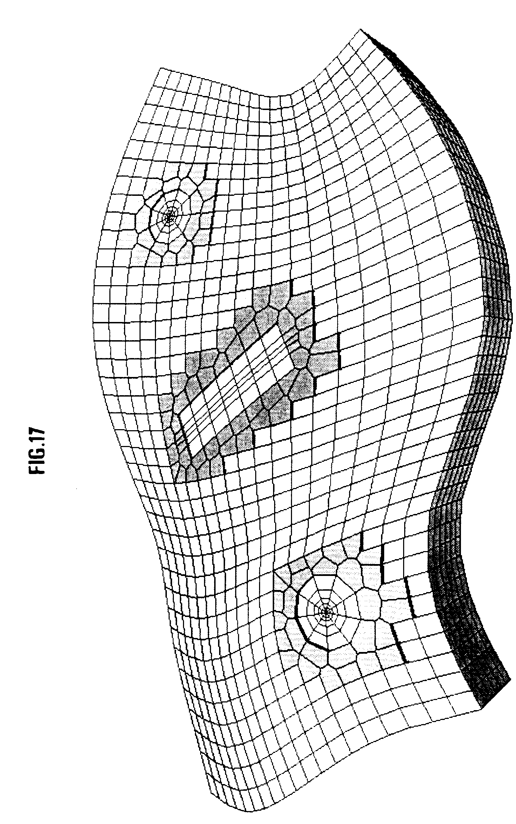

- la Fig.15 montre un exemple de diagramme de puissance obtenu entre deux polygones ;

- la Fig. 16 montre un exemple de maillage interstitiel en 2D formé par la méthode selon l'invention, entre un maillage structuré de réservoir et des maillages structurés formés autour d'un puits vertical et horizontal traversant le réservoir ;

- la fig.17 montre un exemple de maillage global obtenu par la méthode ; et

- la Fig.18 montre cinq puits pourvus chacun d'un maillage radial, intégrés dans un réservoir maillé, par le biais de maillages de transition non structurés à base de mailles polyédriques quelconques.

**Description détaillée**

La génération du maillage hybride de gisement est effectuée par étapes avec addition/soustraction de maillages élémentaires de type différents.

1) Pour représenter le gisement global, on utilise un maillage structuré en i, j, k d'un type connu des spécialistes dit CPG, comme décrit dans le brevet précité FR 2 747 490 du demandeur.

Le réservoir peut être faillé avec glissement d'un bloc par rapport à l'autre. Les horizons et les failles majeurs sont d'abord modélisés par des surfaces continues à partir de données issues d'une interprétation d'images sismiques du sous-sol ou de données obtenues durant des forages (marqueurs aux puits). La structure géologique est ensuite découpée en blocs faillés s'appuyant sur ces surfaces. Ces blocs sont maillés individuellement, puis rassemblés. Pour mailler un bloc, on commence par mailler les surfaces de bord puis on peuple l'intérieur par interpolation transfinie des maillages surfaciques des bords. On applique alors des procédures de relaxation sur les surfaces de bord et à l'intérieur pour harmoniser et régulariser le maillage. Le maillage ainsi obtenu respecte rigoureusement les horizons, les failles et permet de représenter certaines inconformités telles que des biseaux.

Il satisfait à toutes les contraintes d'ordre géologique.

Un tel maillage est effectué en accord par exemple avec la méthode décrite dans le brevet FR 2 747 490 précité.

2) On dessine de façon synthétique ou on importe les trajectoires de puits. On génère alors un maillage radial structuré autour de chaque puits pour tenir compte des contraintes particulières liées aux écoulements à proximité de ces puits.

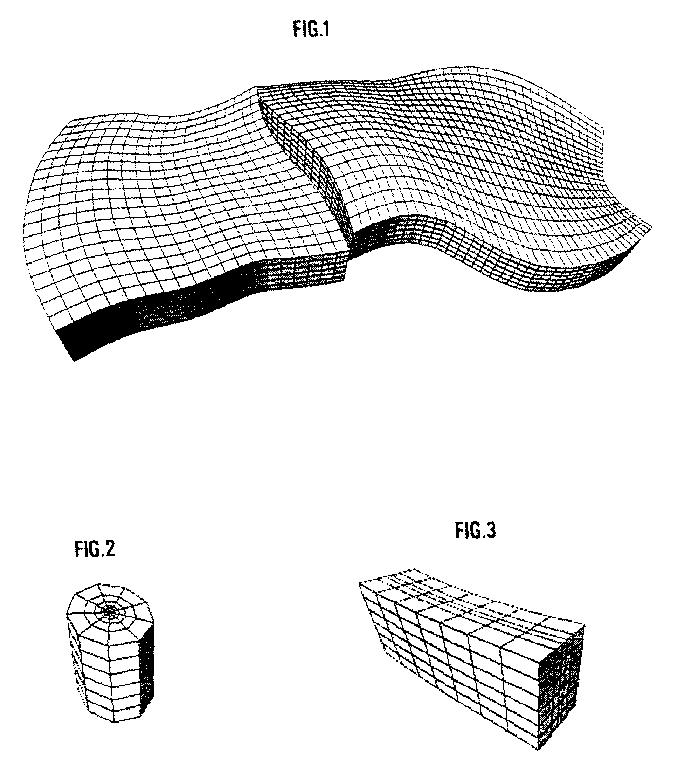

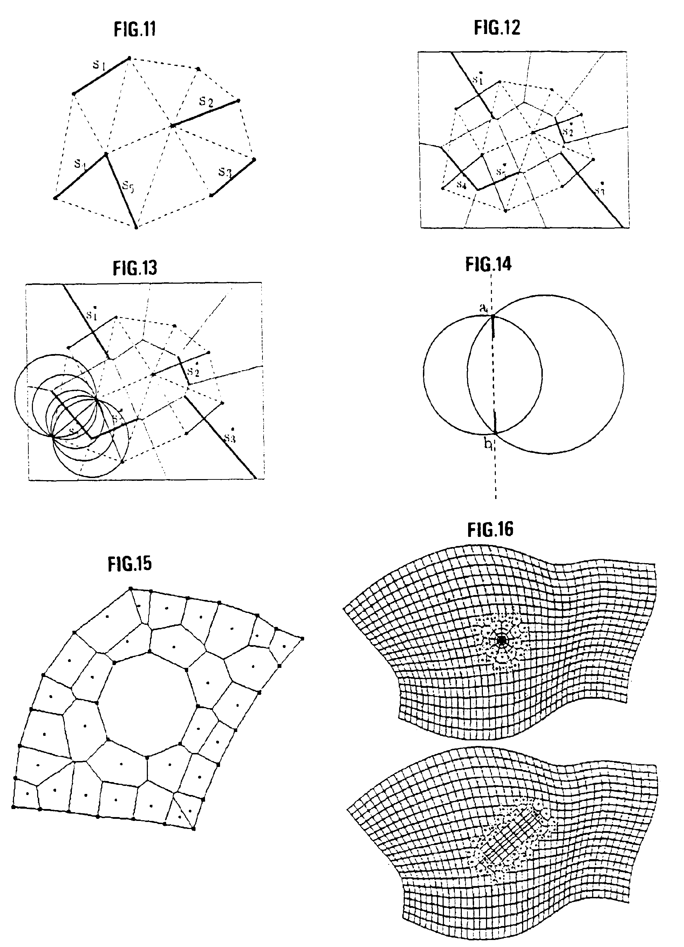

Dans l'exemple représenté à la Fig.2, le maillage structuré autour d'un puits vertical est de type radial circulaire. C'est un maillage de type CPG également. Sa génération consiste dans un premier temps à échantillonner un disque en $r$, $\theta$ dans le plan horizontal. Le maillage 2D ainsi obtenu est ensuite projeté verticalement sur les différentes couches du maillage du réservoir. Ici, les i, j, k de la structure matricielle correspondent aux échantillonnages en $r$, $\theta$ et $z$ respectivement (cf. Fig.11).

Le maillage autour d'un puits horizontal (Fig.3) est structuré en i, j, k, du même type que celui du gisement à la différence qu'un puits ne peut pas être faillé. Il est également obtenu en projetant verticalement sur les différentes couches du maillage de réservoir, un maillage 2D appartenant à un plan horizontal.

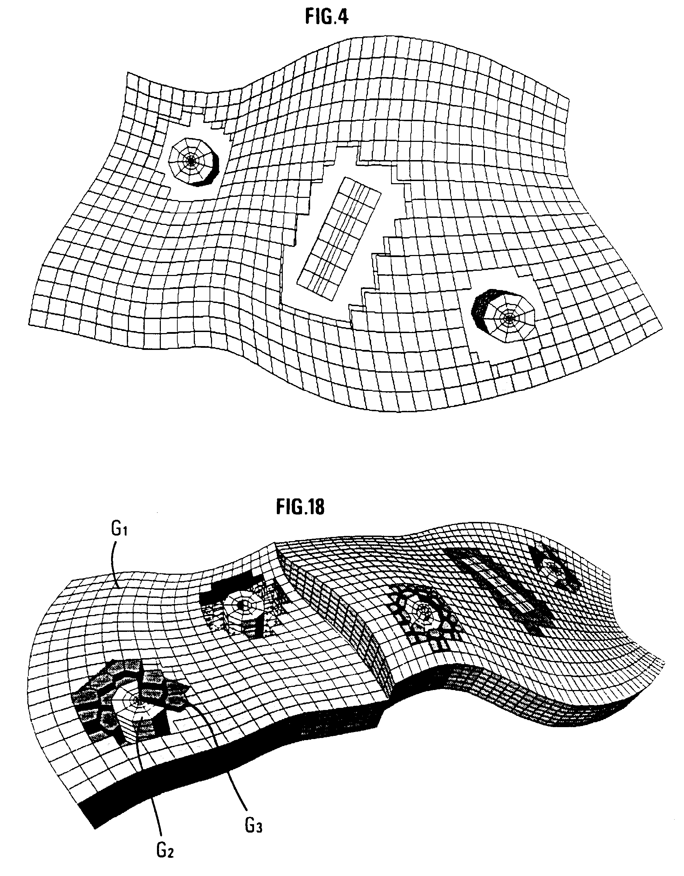

3) Puis, on insère ce maillage radial autour du ou de chaque puits dans le maillage global du réservoir. Pour cela, on crée dans un premier temps une cavité dans le maillage du réservoir en y désactivant toutes les mailles en contact avec des mailles du puits (Fig.4, 5). L'espace dégagé entre le maillage du gisement et le maillage du puits doit être suffisant pour réaliser commodément un maillage de transition. Il peut représenter par exemple environ l'équivalent de deux couches de mailles.

4) On génère ensuite un maillage de transition non structuré dans cette cavité (Fig.16, 17) pour relier le maillage radial structuré autour du puits à celui du réservoir qui respecte au mieux les contraintes liées au schéma numérique. L'utilisateur peut à tout moment revenir désactiver le maillage d'un puits en réactivant les mailles de la cavité correspondante dans le maillage du réservoir.

Pour réaliser le maillage de transition on va utiliser une technique connue en soi que l'on trouve décrite par exemple par :

-    Aurenhammer, F.,1987 : Power diagrams : properties, algorithms and applications. *SIAM J. Comput.,* 16(1), 78-96,

dont on va rappeler ci-après quelques notions pour la clarté de l'exposé.

### Point pondéré

Soit $p$ un point de $\Re^3$ auquel on associe un poids w. On appelle point pondéré et on note $\rho$ le couple $(p, w)$ ainsi formé. Un point pondéré peut aussi être interprété comme un cercle C de centre $p$ et de rayon $\sqrt{w}$.

### Notion de puissance

On désigne par $Puis_{(\rho,x)} = Puis_{(S,x)} = |px|^2 - w$ la puissance d'un point $x$ par rapport au point pondéré $\rho$ ou par rapport au cercle $C$. $|px|^2$ représente ici la distance euclidienne entre $p$ et $x$. Géométriquement, si $x$ est à l'extérieur du cercle et si $t$ est le point d'intersection d'une tangente à $C$ passant par $x$, $Puis_{(S,x)} = |xt|^2$ (cf. Fig. 9).

### Puissance d'un point par rapport à un cercle

Soit $C$ le cercle de centre $c$ et de rayon $r,$ d'équation :

$$C(x) = 0 \text{ où } C(x) = xc^2 - r$$

$C(x)$ est la puissance du point x par rapport à $C$.

### Diagramme de puissance

Soit S un ensemble de points pondérés. A chaque point $\rho$ de S, on associe une région $R(\rho)$, potentiellement vide, définie par :

$$R(\rho) = \left\{ x \in \Re^3 \, / \, Puis_{(\rho,x)} < Puis_{(\rho_i,x)}, \rho_i \in S - \{\rho\} \right\}$$

Cet ensemble de régions, ou encore cellules est appelé diagramme de puissance de S.

Axe radical de deux cercles

L'axe radical de deux cercles est la droite formée par les points ayant la même puissance vis à vis des deux cercles. En particulier si les deux cercles ont une intersection non nulle l'axe radical est la droite passant par l'intersection (Fig.10).

Utilisation des diagrammes de puissance

Les diagrammes de puissance se prêtent bien à la résolution du problème posé car ils ont l'avantage de posséder les propriétés suivantes : les cellules qui le composent sont convexes, chaque cellule possède un centre (site) et la droite reliant les centres de deux cellules adjacentes est perpendiculaire à l'arête commune aux deux cellules, propriétés qui satisfont donc à une partie des conditions posées.
On souhaite en outre que les cellules du diagramme de puissance respectent les arêtes des polygones frontières. Il faut donc que les arêtes des polygones soient des arêtes du diagramme de puissance. Pour réaliser un tel diagramme, on impose comme contrainte que les arêtes des polygones soit les arêtes d'une triangulation de Delaunay couramment utilisée dans le domaine des maillages. Cette contrainte est facilement réalisable car on détermine les polygones frontières lors de la création de la cavité. Une fois cette condition établie, il est possible comme on va le voir, de créer un diagramme de puissance respectant les contraintes.

Diagramme de puissance contraint : respect des arêtes données

Soit *(S)* un ensemble de *n* arêtes dans le plan appartenant à une triangulation de Delaunay ($T_d$) (cf. Fig. 11).
Soit (S*) l'ensemble des arêtes duales de (S)dans le diagramme de Voronoï associé à ($T_d$)(cf. Fig. 12).
Soit $a_i$ et $b_i$, i = 1..n, les extrémités de l'arête $S_i$. On considère son arête duale $S^*_i$ dans le diagramme de Voronoï associé à ($T_d$). Elle définit un ensemble de cercles ($C_i$) de centres $c_i$ pris sur $S^*_i$ et de rayon $\| c_i a_i \| = \| c_i b_i \|$. Tout cercle $C_i$ de ($C_i$) porte donc $a_i$ et $b_i$ et, est un cercle vide (Fig.13). On considère $C^1_i$ et $C^2_i$ deux cercles de ($C_i$). D'après ce qui précède, $a_i$ et $b_i$ sont sur $C^1_i$ et $C^2_i$, $a_i$ et $b_i$ sont donc les points d'intersection de $C^1_i$ et $C^2_i$ et se situent sur leur axe radical. En termes de puissance, on peut donc écrire :

$$C^1_i(a_i) = C^2_i(a_i) = C^1_i(b_i) = C^2_i(b_i) = 0$$

Par construction, quelque soit $C_j$ de ($C_j$), j = 1..n, j ≠ i, l'intérieur de $C_j$ est vide et ne contient donc ni $a_i$, ni $b_i$. On peut encore écrire :

$$\forall j, \; C_j(a_i) \geq 0$$

$$\forall j, \; C_j(b_i) \geq 0$$

De là, $a_i$ appartient à une arête du diagramme de puissance, portée par l'axe radical de $C^1_i$ et de $C^2_i$, $b_i$ appartient à une arête du diagramme de puissance, portée par l'axe radical de $C^1_i$ et de $C^2_i$ (Fig.14).
Comme par définition, les cellules d'un diagramme de puissance sont convexes, on en déduit que le segment $\llcorner a_i b_i \lrcorner = S_i$ fait partie du diagramme de puissance.
Ceci est vrai pour tout $S_i$ de (S). On peut donc construire un diagramme de puissance contraint contenant l'ensemble des segments de (S). Le degré de liberté pour construire un tel diagramme est grand car la seule contrainte est de choisir deux centres par arête duale $S^*_i$ pour tout $S_i$ de (S).
On remarque que, si $S^*_i$ est réduite à un point, l'ensemble ($C_i$) est réduit à un cercle de centre $c_i = S^*_i$. Il faut donc utiliser dans un tel cas un centre $c_{iv}$ virtuel, infiniment proche du premier pour définir un second cercle.

**Construction du maillage de transition à l'aide des diagrammes de puissance**

Pour créer un diagramme de puissance, maillage de transition, on commence par construire une triangulation de Delaunay des extrémités sommets des arêtes des polygones frontières. On vérifie que toutes les arêtes initiales sont bien des arêtes de la triangulation obtenue. Ceci fait, on construit le diagramme de Voronoï associé aux sommets des polygones. Ce diagramme de Voronoï définit pour chaque arête A des polygones, une arête duale A '

Par la suite, pour chaque arête A, on positionne deux sites du diagramme de puissance final sur A '. Puisque les sites doivent être des points pondérés, on associe au site x situé sur A' un poids équivalent à la distance $\|ax\|^2$ où a est une extrémité de A. Le diagramme de puissance obtenu à partir de ces sites respecte alors les arêtes des polygones. La Fig. 16 est un exemple de diagramme de puissance obtenu entre deux polygones avec un seul site par arête.

Une fois ce diagramme obtenu, toutes les contraintes de départ sont maintenant respectées sauf à bien vérifier que chaque site est à l'intérieur de sa cellule. Par construction, on a positionné les sites sur les arêtes duales sans en préciser la manière. On a jusqu'à présent montré qu'il existait un diagramme de puissance correct dès lors que les sites étaient choisis sur A ', mais les possibilités dans le choix de ces sites sont multiples. Il est possible toutefois de garantir que si toute arête A intersecte son arête duale A', il existe au moins un diagramme de puissance respectant les polygones frontières et dont les sites sont à l'intérieur de leur cellule.

**Résultats**

La Fig.16 montre deux exemples de maillage 2D. Le premier exemple correspond à une situation de puits vertical quant à la seconde elle représente le cas d'un puits horizontal. On peut vérifier sur ces exemples que les cellules générées pour joindre les maillages des puits et du gisement respectent les contraintes énoncées dans le problème : les cellules sont convexes, les sites sont à l'intérieur de leur cellule, les arêtes des polygones (bords des maillages) sont respectées, et la droite joignant les sites de deux cellules adjacentes est perpendiculaire à l'arête commune aux deux cellules.

L'étape 2D permet dans un premier temps de générer les maillages de transition et ainsi de connecter les maillages de puits avec le maillage de gisement. Pour obtenir des maillages en volume, on transforme les maillages initiaux en maillages 2D, et on applique aux résultats en 2D un traitement inverse, permettant d'obtenir un maillage global final en 2,5D.

On a considéré le cas où les deuxièmes maillages structurés étaient de type radial et formés autour de puits traversant le milieu, avec délimitation de cavités autour de chaque deuxième maillage pour y inclure un maillage de transition. Il est clair cependant que la méthode s'applique au maillage d'un milieu présentant d'autres types de discontinuité géométrique, tel que par exemple un gisement souterrain traversé par des fissures. Dans un tel cas, on forme des maillages structurés dans des parties du milieu de part et d'autre des fissures et l'on délimite des cavités en désactivant des mailles des deux maillages structuré autour de chaque fissure, assez grandes pour y former des maillages de transition non structurés en utilisant des diagrammes de puissance et en imposant aux maillages de transition d'être conformes au maillage des parois de chaque cavité.

**Revendications**

**1.** Méthode pour générer un maillage hybride adapté à un milieu hétérogène tel que le sous-sol, traversé par au moins une discontinuité géométrique de géométrie connue, dans le but de former un modèle représentatif d'écoulements de fluides dans ce milieu en accord avec un schéma numérique défini, la structure du milieu étant connue a priori à partir de données disponibles acquises par des mesures in situ, par des analyses et/ou des interprétations d'images du milieu, comportant la formation d'au moins un premier maillage structuré pour mailler au moins une partie du milieu, la formation d'au moins un deuxième maillage structuré pour mailler une autre partie du milieu contenant la discontinuité géométrique, la formation d'une cavité entre le premier maillage structuré et chaque deuxième maillage structuré englobant chaque discontinuité géométrique et de taille suffisante pour que l'on puisse former au moins un maillage non structuré assurant la transition entre les maillages structurés, caractérisée en ce que l'on forme chaque maillage non structuré de transition en utilisant des diagrammes de puissance et en imposant aux maillages de transition d'être conformes au maillage des frontières de chaque cavité.

**2.** Méthode selon la revendication 1, appliquée à un milieu hétérogène où au moins une discontinuité géométrique est un conduit ou puits de géométrie connue traversant le milieu, caractérisée en ce que chaque deuxième maillage structuré est de type radial et chaque cavité est délimitée autour de chaque deuxième maillage radial structuré en désactivant des mailles de chaque premier maillage structuré.

**3.** Méthode selon la revendication 1 ou 2, appliquée à un milieu hétérogène où au moins une discontinuité géométrique est une fracture ou une faille traversant le milieu hétérogène, caractérisée en ce que l'on forme un premier maillage structuré et un deuxième maillage structuré dans des parties du milieu hétérogène, de part et d'autre de chaque fracture, en respectant leurs discontinuités, chaque cavité formée pour y inclure un maillage se transition non structuré étant formée en désactivant des mailles des premier et deuxième maillages structurés, de part et d'autre de chaque fracture.

**4.** Méthode selon l'une des revendications précédentes, caractérisée en ce que l'on impose aux arêtes polygonales formant les frontières de chaque cavité, d'être les arêtes d'une triangulation de type Delaunay.

**5.** Méthode pour simuler en accord avec un schéma numérique défini, l'évolution d'un processus tel que des écoulements de fluides dans un milieu hétérogène traversé par au moins une discontinuité géométrique de géométrie connue, la structure du milieu étant connue a priori à partir de données disponibles acquises par des mesures in situ, par des analyses et/ou des interprétations d'images du milieu, comportant la formation d'un maillage hybride constitué d'au moins un premier maillage structuré pour mailler au moins une partie du milieu, la formation d'au moins un deuxième maillage structuré pour mailler une autre partie du milieu, la formation d'une cavité entre le premier maillage structuré et chaque deuxième maillage structuré englobant chaque discontinuité géométrique et de taille suffisante pour que l'on puisse former au moins un maillage non structuré assurant la transition entre les maillages structurés, caractérisée en ce que :

- l'on construit les maillages non structurés de transition en utilisant des diagrammes de puissance et en imposant aux maillages de transition d'être conformes au maillage des parois des dites cavités ; et

- on résout le schéma numérique dans le maillage réalisé sur le milieu pour modéliser le processus.

**6.** Méthode selon l'une des revendications précédentes, caractérisée en ce que chaque premier maillage structuré est un maillage non régulier, de type CPG par exemple.

FIG.1

FIG.2

FIG.3

**FIG.4**

**FIG.18**

**FIG.5**

Puits

Gisement

Cavité

Polygones frontières

**FIG.6**

**FIG.7**

**FIG.8A**

**FIG.8B**

**FIG.9**

$S$

$t$

$\sqrt{w}$

$p$

$x$

**FIG.10**

**FIG.11**

**FIG.12**

**FIG.13**

**FIG.14**

**FIG.15**

**FIG.16**

EP 1 107 187 A1

FIG.17

14

**EP 1 107 187 A1**

**Office européen des brevets**

# RAPPORT DE RECHERCHE EUROPEENNE

Numéro de la demande

EP 00 40 3290

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | GB 2 322 702 A (SCHLUMBERGER HOLDINGS) 2 septembre 1998 (1998-09-02) * page 4, ligne 25 - page 8, ligne 12 * * page 45, ligne 23 - page 46, ligne 10 * * figures 22-25 * --- | 1-6 | G06T17/20 |
| X | WO 99 57418 A (SCHLUMBERGER EVALUATION & PROD) 11 novembre 1999 (1999-11-11) | 1-3,5,6 | |
| A | * page 3, ligne 5 - page 4, ligne 17 * * figures 3-8 * --- | 4 | |
| A | SOUCY M ET AL: "A GENERAL SURFACE APPROACH TO THE INTEGRATION OF A SET OF RANGE VIEWS" IEEE TRANSACTIONS ON PATTERN ANALYSIS AND MACHINE INTELLIGENCE,US,IEEE INC. NEW YORK, vol. 17, no. 4, 1 avril 1995 (1995-04-01), pages 344-358, XP000499566 ISSN: 0162-8828 * paragraphes IV, IV.F * * figures 11,12 * --- | 1-6 | |
| D,A | AURENHAMMER F: "Power diagrams: properties, algorithms and applications" SIAM JOURNAL ON COMPUTING, FEB. 1987, USA, vol. 16, no. 1, pages 78-96, XP000900943 ISSN: 0097-5397 * le document en entier * ----- | 1-6 | **DOMAINES TECHNIQUES RECHERCHES (Int.Cl.7)** G06T |

Le présent rapport a été établi pour toutes les revendications

| Lieu de la recherche | Date d'achèvement de la recherche | Examinateur |
|---|---|---|
| BERLIN | 26 février 2001 | Kröner, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P04C02)

15

**ANNEXE AU RAPPORT DE RECHERCHE EUROPEENNE
RELATIF A LA DEMANDE DE BREVET EUROPEEN NO.**

EP 00 40 3290

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-02-2001

| Document brevet cité au rapport de recherche | | Date de publication | Membre(s) de la famille de brevet(s) | | Date de publication |
|---|---|---|---|---|---|
| GB 2322702 | A | 02-09-1998 | US | 6018497 A | 25-01-2000 |
| | | | CA | 2228544 A | 27-08-1998 |
| | | | FR | 2760848 A | 18-09-1998 |
| | | | NO | 980821 A | 28-08-1998 |
| | | | US | 6078869 A | 20-06-2000 |
| WO 9957418 | A | 11-11-1999 | AU | 2950499 A | 23-11-1999 |
| | | | GB | 2352036 A | 17-01-2001 |

EPO FORM P0460

Pour tout renseignement concernant cette annexe : voir Journal Officiel de l'Office européen des brevets, No.12/82